# NEUE EUROPÄISCHE PATENTSCHRIFT

(11) **EP 3 286 613 B2**
(45) Veröffentlichungstag und Bekanntmachung des Hinweises auf die Entscheidung über den Einspruch: **26.06.2024**
(45) Hinweis auf die Patenterteilung: 27.11.2019
(21) Anmeldenummer: 16726052.0
(22) Anmeldetag: 20.05.2016
(51) Int. Cl.: G05B 19/042, G06F 9/445

(54) **VERFAHREN ZUM NACHLADEN VON PROGRAMMKOMPONENTEN IN EINE AUTOMATISIERUNGSKOMPONENTE**
METHOD AND DEVICE FOR OPERATING AN AUTOMATION COMPONENT
PROCÉDÉ ET DISPOSITIF POUR FAIRE FONCTIONNER UN COMPOSANT D'AUTOMATISATION

(30) Priorität: 24.07.2015 DE 102015214054
(43) Veröffentlichungstag der Anmeldung: 28.02.2018
(73) Patentinhaber: Siemens Aktiengesellschaft, 80333 München (DE)
(72) Erfinder: SCHÖNBERGER, Andreas, 96049 Bamberg (DE)
(74) Vertreter: Siemens Patent Attorneys
(86) Internationale Anmeldenummer: PCT/EP2016/061394
(87) Internationale Veröffentlichungsnummer: WO 2017/016699

(56) Entgegenhaltungen:
- EP-A1- 1 300 787
- DE-A1- 10 007 971
- DE-A1-102010 043 011
- DE-A1-102011 106 078
- DE-A1-102011 107 550
- DE-A1-102012 102 506
- DE-T3- 60 203 458
- DE-T5-112004 000 242
- US-A1- 2003 074 603
- Steinegger Michael; Zoitl Alois; Fein Martin; Schitter Georg: "Design patterns for separating fault handling from control code in discrete manufacturing systems", IECON 2013 - 39th Annual Conference of the IEEE Industrial Electronics Society, IEEE, 10 November 2013 (2013-11-10), pages 4368-4373, ISSN: 1553-572X, DOI: 10.1109/IECON.2013.6699838

## Beschreibung

Die vorliegende Erfindung betrifft ein Verfahren zum Betreiben einer Automatisierungskomponente mittels eines Steuerprogramms, das mehrere Steuerprogrammkomponenten umfasst und eine Automatisierungskomponente.

Automatisierungskomponenten wie Feldgeräte oder programmierbare Logik-Controller (PLC) werden in Industrieanlagen aller Art in komplexe Automatisierungssysteme integriert.

Dazu werden frei programmierbare Anteile von Automatisierungskomponenten spezifisch für diese Automatisierungssysteme programmiert. Aufgrund der Komplexität der Automatisierungssysteme ergibt sich, dass bestimmte Fehlerereignisse der Automatisierungskomponenten erst zur Laufzeit auftreten und die Reaktion auf viele Fehlerereignisse spezifisch für das jeweilige Automatisierungssystem definiert werden.

Diese Punkte wiederum kollidieren mit der gängigen Praxis, die Anwendungslogik für eine Fehleranalyse und eine Fehlerbehandlung von Automatisierungskomponenten vor der Auslieferung der Automatisierungskomponente zu programmieren, da zum Auslieferungszeitpunkt weder die zukünftigen Fehlereignisse noch die Reaktion auf diese Fehlerereignisse bekannt sind.

Daraus entsteht das Problem, dass auf Basis der Fehlerereignisse lediglich unzureichende Fehlerdaten aus den Automatisierungskomponenten erhoben werden können und unpassende Fehlerbehandlungsprozeduren angestoßen werden. Folglich muss eine Fehleranalyse häufig durch aufwändige semiautomatisierte Analyse durchgeführt werden. Die Fehlerbehandlung neuer Fehlerereignisse wird nur unzureichend durch die vorhandene Anwendungslogik auf den Automatisierungskomponenten unterstützt. Dies macht es erforderlich, dass die Fehlerbehandlung aufwändig nachinstalliert oder aber manuell ausgeführt werden muss.

Die Fehleranalyse und die Fehlerbehandlung werden einerseits zur Produktentwicklungszeit von Automatisierungskomponenten definiert und anderseits durch aufwändige manuelle und semiautomatisierte Verfahren ergänzt.

Die Druckschrift DE 100 07 971 A1 betrifft Prozesssteuersysteme und insbesondere die automatische Erfassung, Analyse und Korrektur von Problemen, die in Funktionsblöcken, Geräten und Regelkreisen in einer Prozesssteuerung.

Die Druckschrift EP 1 300 787 A1 betrifft eine Technik, die bei der Erfassung eines Fehlers eines Geräts, wie beispielsweise einer Klimaanlage, eine Diagnose des Fehlers, einen Notfallbetrieb und Reparatur des Gerätes durchführt. Das Gerät ist mit einem Steuerzentrum über ein Kommunikationsnetzwerk verbunden.

Die Druckschrift DE 10 2011 107550 A1 betrifft ein Steuergerät zur sicheren Steuerung von Komponenten in einem Kraftfahrzeug bzw. ein Verfahren zum Notlaufbetrieb dieser Komponenten.

Die Druckschrift DE 10 2011 106078 A1 betrifft eine Fahrzeugeinheit zur Steuerung von Fahrzeugfunktionen, beispielsweise eine zentrale Fahrzeugsteuereinheit, eine Multimedia-Fahrzeugeinheit oder dergleichen, sowie ein Verfahren zum Betreiben dieser Fahrzeugeinheit.

Die Druckschrift DE 10 2010 043011 A1 betrifft ein Verfahren zur Programmierung bzw. Aktualisierung von Softwareständen, insbesondere von Firmware, von Gebäudetechnik-Busteilnehmern mit Update-Software.

Es ist die Aufgabe der vorliegenden Erfindung, die Fehleranalyse und die Fehlerbehandlung von Automatisierungskomponenten zu verbessern.

Diese Aufgabe wird durch die Gegenstände nach den unabhängigen Patentansprüchen gelöst. Vorteilhafte Ausführungsformen sind Gegenstand der Beschreibung, der Zeichnungen und der abhängigen Ansprüche.

Gemäß einem ersten Aspekt wird diese Aufgabe durch ein Verfahren zum Betreiben einer Automatisierungskomponente mittels eines Steuerprogramms gelöst, das mehrere Steuerprogrammkomponenten umfasst, mit den Schritten eines Erfassens von Fehlerereignissen des Steuerprogramms während einem Betrieb der Automatisierungskomponente; eines Herunterladens einer aktuellen Steuerprogrammkomponente aus einem zentralen System zur Fehleranalyse auf Basis der erfassten Fehlerereignisse und auf Basis eines Prozessabbildes der Automatisierungskomponente; und eines Aktualisierens einer vorhandenen Steuerprogrammkomponente zur Fehleranalyse durch die aktuelle Steuerprogrammkomponente zur Fehleranalyse. Erfindungsgemäß ist das Prozessabbild ein Abbild der Signalzustände der digitalen Ein- und Ausgänge in einer CPU der Automatisierungskomponente. Durch das Verfahren wird beispielsweise ebenfalls der technische Vorteil erreicht, dass bei der anfänglichen Einrichtung der Automatisierungskomponente ein schlankes Steuerprogramm aufgespielt werden kann, dass je nach auftretenden Fehlerereignissen automatisch um weitere Steuerprogrammkomponenten ergänzt wird.

In einer vorteilhaften Ausführungsform des Verfahrens umfasst das Verfahren den Schritt eines Herunterladens einer aktuellen Steuerprogrammkomponente zur Fehlerbehandlung auf Basis der erfassten Fehlerereignisse aus einer Datenbank des zentralen Systems. Dadurch wird beispielsweise ebenfalls der technische Vorteil erreicht, dass auftretende Fehler nicht nur analysiert, sondern auch automatisch behoben werden können.

In einer weiteren vorteilhaften Ausführungsform des Verfahrens umfasst das Verfahren den Schritt eines Aktualisierens einer vorhandenen Steuerprogrammkomponente zur Fehlerbehandlung durch die aktuelle Steuerprogrammkomponente zur Fehlerbehandlung. Dadurch wird beispielsweise ebenfalls der technische Vorteil erreicht, dass auftretende Fehler nicht nur analysiert, sondern auch automatisch behoben werden können.

In einer weiteren vorteilhaften Ausführungsform des Verfahrens wird die heruntergeladene Steuerprogrammkomponente auf schädliche Anweisungen hin überprüft. Dadurch wird beispielsweise der technische Vorteil erreicht, dass die Ausführung bei Vorliegen einer schadhaften Steuerprogrammkomponente verhindert werden kann.

In einer weiteren vorteilhaften Ausführungsform des Verfahrens erfolgt das Herunterladen der aktuellen Steuerprogrammkomponente auf Basis eines Prozessabbildes der Automatisierungskomponente. Dadurch wird beispielsweise der technische Vorteil erreicht, dass je nach Prozessabbild eine geeignete Steuerprogrammkomponente ausgewählt werden kann, die zu den Prozessen der Automatisierungskomponente passt.

In einer weiteren vorteilhaften Ausführungsform des Verfahrens werden die Fehlerereignisse der Automatisierungskomponente an das zentrale System übermittelt. Dadurch wird beispielsweise der technische Vorteil erreicht, dass Informationen über auftretende Fehlerereignisse an zentraler Stelle gesammelt werden.

In einer weiteren vorteilhaften Ausführungsform des Verfahrens werden die Fehlerereignisse in dem zentralen System auf jeweilige Steuerprogrammkomponenten zur Fehleranalyse oder Fehlerbehandlung abgebildet. Dadurch wird beispielsweise der technische Vorteil erreicht, dass stets eine aktuelle Steuerprogrammkomponente für alle verbundenen Automatisierungskomponenten bereitgehalten werden kann.

In einer weiteren vorteilhaften Ausführungsform des Verfahrens übermittelt die Automatisierungskomponente eine Gerätekennung oder einen Gerätetyp an das zentrale System. Dadurch wird beispielsweise der technische Vorteil erreicht, dass eine passende Steuerprogrammkomponente zusätzlich auf Basis einer Gerätekennung ausgewählt werden kann.

In einer weiteren vorteilhaften Ausführungsform des Verfahrens bestimmt das zentrale System die Steuerprogrammkomponente zur Fehleranalyse oder Fehlerbehandlung auf Basis der übermittelten Gerätekennung oder des übermittelten Gerätetyps. Dadurch wird beispielsweise ebenfalls der technische Vorteil erreicht, dass eine passende Steuerprogrammkomponente zusätzlich auf Basis einer Gerätekennung oder Gerätetyps ausgewählt werden kann.

Gemäß einem zweiten Aspekt wird diese Aufgabe durch eine Automatisierungskomponente mit einem Steuerprogramm gelöst, das mehrere Steuerprogrammkomponenten umfasst, mit einer Fehlerereigniserfassungseinheit zum Erfassen von Fehlerereignissen des Steuerprogramms während einem Betrieb der Automatisierungskomponente; einer Nachladeeinheit, eingerichtet zum Herunterladen einer aktuellen Steuerprogrammkomponente aus einem zentralen System zur Fehleranalyse auf Basis der Fehlerereignissen und auf Basis eines Prozessabbildes der Automatisierungskomponente; und einer Aktualisierungseinheit eingerichtet zum Aktualisieren einer vorhandenen Steuerprogrammkomponente zur Fehleranalyse durch die aktuelle Steuerprogrammkomponente zur Fehleranalyse. Erfindungsgemäß ist das Prozessabbild ein Abbild der Signalzustände der digitalen Ein- und Ausgänge in einer CPU der Automatisierungskomponente. Durch die Automatisierungskomponente wird beispielsweise ebenfalls der technische Vorteil erreicht, dass bei der anfänglichen Einrichtung der Automatisierungskomponente ein schlankes Steuerprogramm aufgespielt werden kann, dass je nach auftretenden Fehlerereignissen automatisch um weitere Steuerprogrammkomponenten ergänzt wird.

In einer vorteilhaften Ausführungsform der Automatisierungskomponente umfasst die Automatisierungskomponente eine Vorrichtung zum Überprüfen der heruntergeladenen Steuerprogrammkomponente auf schädliche Anweisungen hin. Dadurch wird beispielsweise ebenfalls der technische Vorteil erreicht, dass die Ausführung bei Vorliegen einer schadhaften Steuerprogrammkomponente verhindert werden kann.

In einer weiteren vorteilhaften Ausführungsform der Automatisierungskomponente umfasst die Automatisierungskomponente eine Sendeinrichtung zum Senden der Fehlerereignisse an das zentrale System. Dadurch wird beispielsweise der technische Vorteil erreicht, dass die Fehlerereignisse der verbundenen Automatisierungskomponenten zentral ausgewertet werden können.

In einer weiteren vorteilhaften Ausführungsform der Automatisierungskomponente umfasst die Automatisierungskomponente eine Sendeinrichtung zum Senden einer Gerätekennung oder eines Gerätetyps an das zentrale System. Dadurch wird beispielsweise ebenfalls der technische Vorteil erreicht, dass eine passende Steuerprogrammkomponente zusätzlich auf Basis einer Gerätekennung oder eines Gerätetyps ausgewählt werden kann.

In einer vorteilhaften Ausführungsform der Automatisierungskomponente ist die Aktualisierungseinheit zum Aktualisieren einer vorhandenen Steuerprogrammkomponente zur Fehlerbehebung durch eine aktuelle Steuerprogrammkomponente zur Fehlerbehebung ausgebildet. Dadurch wird beispielsweise der technische Vorteil erreicht, dass die Fehlerereignisse nicht nur analysiert werden können, sondern auch durch aktuelle Steuerprogrammkomponenten behoben werden können.

Gemäß einem dritten Aspekt wird diese Aufgabe durch ein Automatisierungssystem mit einer Mehrzahl von Automatisierungskomponenten nach dem zweiten Aspekt gelöst, mit einem zentralen System, das mit den Automatisierungskomponenten zum Erfassen von Fehlereignissen verbunden ist, und das eine Abbildungstabelle zum Abbilden von übermittelten Fehlerereignissen auf entsprechende Steuerprogrammkomponenten zur Fehleranalyse oder Fehlerbehandlung umfasst. Durch das Automatisierungssystem werden die gleichen technischen Vorteile wie durch das Verfahren nach dem ersten Aspekt oder die Automatisierungskomponente nach dem zweiten Aspekt gelöst.

Ausführungsbeispiele der Erfindung sind in den Zeichnungen dargestellt und werden im Folgenden näher beschrieben.

Es zeigen:
- Fig. 1: eine schematische Ansicht eines Automatisierungssystems; und
- Fig. 2: ein Blockdiagramm des Verfahrens.

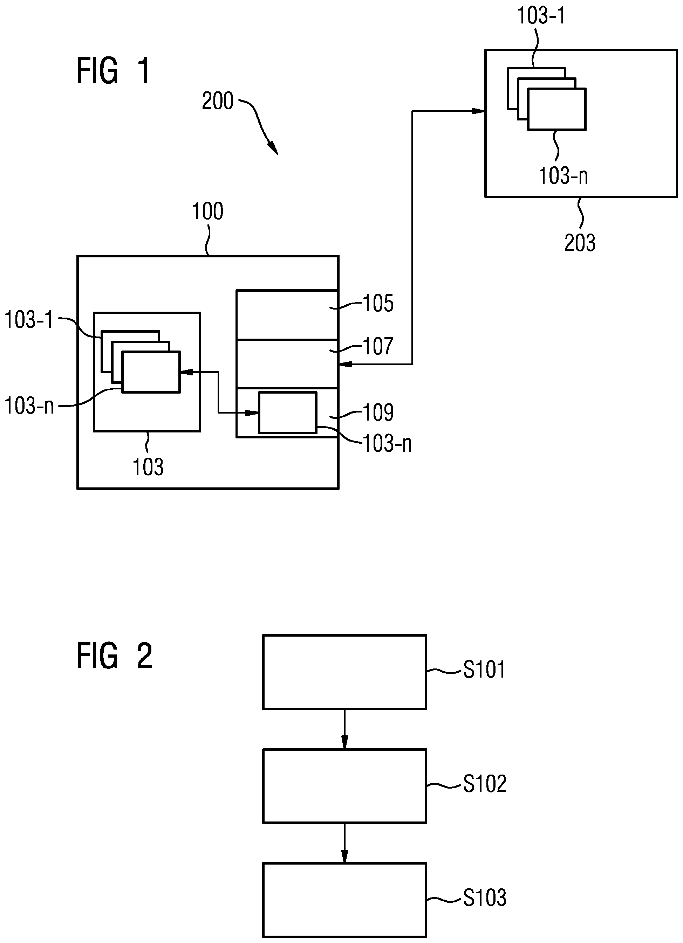

Fig. 1 zeigt eine schematische Ansicht eines Automatisierungssystems 200 mit einer Automatisierungskomponente 100 und einem zentralen System 203. Die Automatisierungskomponente 100 ist ein Teilstück einer Automatisierungsanlage. In dieser Automatisierungsanlage arbeiten die einzelnen Automatisierungskomponenten 100 so zusammen, dass die Automatisierungsanlage hohe Leistungen in Sachen Präzision, Stückzahl und Produktionsgeschwindigkeit erzielen kann.

Die Automatisierungskomponente 100 ist beispielsweise ein Ventil, Antrieb, Feldgerät, Aktor, Sensor, ein Greifer oder eine Steuerkomponente für diese Vorrichtungen. Die Automatisierungskomponente 100 ist mit einem Steuerprogramm frei programmierbar, das aufgabenspezifisch konfiguriert oder programmiert ist. Zu diesem Zweck umfasst die Automatisierungskomponente 100 einen Prozessor zum Verarbeiten von Daten und Anweisungen des Steuerprogramms 103 und einen Datenspeicher, wie beispielsweise einen RAM-Speicher oder einen ROM-Speicher, zum Speichern von Daten und Anweisungen des Steuerprogramms 103.

Die Automatisierungskomponente 100 umfasst eine Fehlerereigniserfassungseinheit 105 zum Erfassen von Fehlerereignissen, die während einem Betrieb der Automatisierungskomponente 100 auftreten. Fehlereignisse sind beispielsweise Fehlermeldungen über Verbindungsfehler oder Steuerfehler oder auch Abweichungen von Sollwerten oder das Erreichen von Grenzwerten oder Schwellwerten. Im Allgemeinen können die Fehlerereignisse alle Ereignisse abdecken, die das Abweichen der Automatisierungskomponente 100 oder des anwendungsspezifischen Codes der Automatisierungskomponente 100 von einem Normalzustand anzeigen. Das Fehlerereignis wird durch einen digitalen Datensatz repräsentiert, der eine entsprechende Information umfasst

Die erfassten Fehlerereignisse werden an das zentrale System 203 mittels einer Sendevorrichtung über die Datenleitung übermittelt, beispielsweise als Datenpakete über das Internet.

Das zentrale System 203 ist mit den Automatisierungskomponenten 100 über eine Datenleitung verbunden und empfängt die Fehlerereignisse von der Automatisierungskomponente 100. Das zentrale System 203 umfasst einen Datenspeicher in dem eine Vielzahl von Steuerprogrammkomponenten 103-1, ..., 103-n abgelegt sind, wie beispielsweise eine Datenbank. Das zentrale System 203 verwendet eine Abbildungstabelle zum Abbilden von übermittelten Fehlerereignissen auf entsprechende Steuerprogrammkomponenten 103-1, ..., 103-n. Je nach übermitteltem Fehlerereignis wird in der Abbildungstabelle nach einer geeigneten Steuerprogrammkomponente 103-1, ..., 103-n zur Fehleranalyse oder zur Fehlerbehebung gesucht, die dem Fehlerereignis zugeordnet ist.

Zudem können auch dann Steuerprogrammkomponenten 103-n+1 entwickelt werden, wenn bisher völlig unbekannte Fehlerereignisse auftreten oder wenn Optimierungen zur Behandlung bereits bekannter Fehlerereignisse bekannt werden. Dadurch kann ein einheitliches Verfahren verwendet werden, um neue Fehleranalyseprogramme zu verteilen. Dies führt dazu, dass mit der Zeit eine immer größere Menge an Fehleranalyseprogrammen zur Verfügung steht.

Sobald eine geeignete Steuerprogrammkomponente 103-1,..., 103-n gefunden ist, wird die aktuelle Steuerprogrammkomponente 103-1, ..., 103-n zur Fehleranalyse oder Fehlerbehebung von einer Nachladeeinheit 107 auf die Automatisierungskomponente 100 heruntergeladen. Eine Aktualisierungseinheit 109 in der Automatisierungskomponente 100 dient zum Einrichten oder Aktualisieren einer vorhandenen Steuerprogrammkomponente 103-1, ..., 103-n zur Fehleranalyse oder Fehlerbehebung durch die aktuelle Steuerprogrammkomponente 103-1, ..., 103-n. Das Aktualisieren umfasst ein Ersetzen oder Ergänzen der vorhandenen Steuerprogrammkomponente 103-1, ..., 103-n. Beispielsweise können bei einer Fehleranalyse, Detaildaten erhoben werden, die in einem Standardprogramm nicht erhoben werden. Dabei braucht das Standardprogramm zur Fehlerbehandlung nicht notwendigerweise ersetzt zu werden.

Zusätzlich kann eine Vorrichtung zum Überprüfen der heruntergeladenen Steuerprogrammkomponente 103-1,..., 103-n auf schädliche Anweisungen hin vorgesehen sein, wie beispielsweise ein Virenscanner.

Eine Ablaufumgebung auf der Automatisierungskomponente 100 ermöglicht die Ausführung der nachgeladenen Steuerprogrammkomponente 103-1, ..., 103-n. Eine Schnittstelle ermöglicht es der nachgeladenen Steuerprogrammkomponente 103-1, ..., 103-n auf Fehlerereignisse und Prozessdaten der Automatisierungskomponente 100 zuzugreifen.

Um eine kompatible Steuerprogrammkomponente 103-1, ..., 103-n aus dem zentralen System 203 zu erhalten, weist die Automatisierungskomponente 100 eine Sendeinrichtung zum Senden einer Gerätekennung an das zentrale System 203 auf. Die Gerätekennung ist beispielsweise eine Seriennummer oder ein Gerätetyp der Automatisierungskomponente 100. Die übermittelte Gerätekennung wird dann von dem zentralen System 203 verwendet, um eine kompatible Steuerprogrammkomponente 103-1, ..., 103-n aus der Vielzahl von Steuerprogrammkomponenten 103-1, ..., 103-n zu identifizieren. Daneben kann ein Prozessabbild an das zentrale System 203 übermittelt werden. Das Prozessabbild ist ein Abbild der Signalzustände der digitalen Ein- und Ausgänge in einer CPU der Automatisierungskomponente.

In dem Automatisierungssystem 200 braucht das zur Produktdefinitionszeit geschriebene Steuerprogram 103 daher nicht manuell modifiziert zu werden, sondern kann automatisch über eine einzeln nachladbare Steuerprogrammkomponente 103-1, ..., 103-n ergänzt werden. Auf Basis der zur Entwicklungszeit definierten Fehlermeldungstypen sowie der zur Laufzeit erfassten Fehlerereignisse und Prozessabbilder der Automatisierungskomponente 100 wird eine spezifische Steuerprogrammkomponente 103-1, ..., 103-n für eine Fehleranalyse und/oder eine Fehlerbehandlung nachgeladen.

Dadurch ist es möglich nach Auslieferung der Automatisierungskomponente 100 schnell und effizient zusätzliche Steuerprogrammkomponenten 103-1, ..., 103-n zur Fehleranalyse und Fehlerbehandlung nachzuladen. Der Aufwand für eine Fehleranalyse oder Fehlerbehandlung kann dadurch verringert werden.

Weiterhin können die Korrektheit, Vollständigkeit und Wiederholbarkeit der Datenerhebung von Fehlerereignissen deutlich verbessert werden. Ein Wissen über wiederkehrende Probleme auf Basis von Fehlerereignissen, die erst nach Auslieferung der Automatisierungskomponente 100 auftreten, kann über unterschiedliche Projekte und Organisationseinheiten hinweg verteilt werden.

Das zentrale System 203 weist eine Kommunikationsverbindung zu der Automatisierungskomponente 100 auf, die in dem Automatisierungssystem 200 eingesetzt wird. Diese Kommunikationsverbindung kann verwendet werden, um die Steuerprogrammkomponente 103-1, ..., 103-n oder anderen Code von dem zentralen System 203 auf die Automatisierungskomponente 100 zu laden. Zudem umfasst das zentrale System 203 eine Abbildungslogik zum Abbilden von Fehlerereignissen und Prozesswerten, die auf Automatisierungskomponenten 100 gesammelt wurden, auf verschiedene Steuerprogrammkomponenten 103-1, ..., 103-n zum Zweck der Fehleranalyse und Fehlerbehandlung. Die so identifizierte Steuerprogramkomponente 103-1, ..., 103-n wird anschließend zum Nachladen angeboten. Das zentrale System 203 sammelt Informationen über Fehlerereignisse und Prozesswerte von Automatisierungskomponenten 100 in unterschiedlichen Automatisierungssystemen 200, um über eine zusätzliche Analyse die Abbildungslogik zum Abbilden der Fehlerereignisse und Prozesswerte auf entsprechende Steuerprogrammkomponenten 103-1, ..., 103-n anzupassen.

Fig. 2 zeigt ein Blockdiagramm des Verfahrens. Das Verfahren lädt Steuerprogrammkomponenten zur Fehleranalyse oder zur Fehlerbehandlung auf Basis von Fehlerereignissen und/oder Prozessabbildern nach.

Das Verfahren umfasst den Schritt S101 eines Erfassens von Fehlerereignissen des Steuerprogramms 103 während einem Betrieb der Automatisierungskomponente 100. Dabei wird erfasst, ob die Automatisierungskomponente 100 von einem Normalzustand abweicht. Das Fehlerereignis wird an das zentrale System 203 übermittelt, beispielsweise in Form einer Fehlerereignis-ID. Das zentrale System 203 wertet die Fehlerereignis-ID aus und sucht nach einer entsprechenden Steuerprogrammkomponente 103-1, ..., 103-n zur Fehleranalyse oder Fehlerbehebung und hält diese zum Herunterladen bereit.
Daneben ist es möglich, den Code für das Fehleranalyseprogramm in Reaktion auf die Fehlerereignisse zu schreiben oder anzupassen.

In Schritt S102 wird die aktuelle Steuerprogrammkomponente 103-1, ..., 103-n von der Automatisierungskomponente 100 über eine Datenleitung heruntergeladen, wie beispielsweise das Internet.

Sobald die aktuelle Steuerprogrammkomponente 103-1, ..., 103-n vollständig heruntergeladen worden ist, wird diese auf der Automatisierungskomponente 100 eingerichtet. Dazu wird in Schritt S103 eine vorhandene Steuerprogrammkomponente 103-1, ..., 103-n zur Fehleranalyse durch die aktuelle Steuerprogrammkomponente 103-1, ..., 103-n aktualisiert.

Das Verfahren kann mit einem weiteren Verfahren kombiniert werden, das nicht nur im Fehlerfall Daten von Automatisierungskomponenten 100 sammelt, sondern Daten kontinuierlich sammelt, um das Nachladen von Steuerprogrammkomponenten prädiktiv vorherzusagen. Im Allgemeinen ist das Verfahren auch für Komponenten anderer hochkomplexer Systeme verwendbar.

Das Wissen über eine Fehleranalyse der Automatisierungskomponenten 100 kann durch das Verfahren besser verteilt werden. Fehlerereignisse können schneller analysiert und behoben werden können, da zur Fehlerbehebung nur eine spezielle Steuerprogrammkomponente 103-1, ..., 103-n nachgeladen wird.

Die Korrektheit, Vollständigkeit und Wiederholbarkeit der Datenerhebung wird verbessert und ausgelieferte Steuerprogramme 103 werden deutlich verschlankt, da Steuerprogrammkomponenten 103-1, ..., 103-n nachgeladen werden können. Daher kann bei einer initialen Auslieferung eine geringere Menge an ausführbarem Steuerprogrammcode bereitgestellt werden. Dies kann insbesondere dazu führen, dass Automatisierungskomponenten mit weniger Programmspeicher ausgestattet werden müssen und so kleiner dimensionierte Hardware zu günstigeren Preisen angeboten werden kann.

Die Reaktion auf Fehler, die zum Zeitpunkt der Produktion des Steuerprogramms 103 nicht bekannt sind oder die aufgrund einer eingeschränkten Sicht auf das Automatisierungssystems 200 nicht vorhersagbar sind, kann auch noch nach dem erstmaligen Einsatz der Automatisierungskomponente 100 definiert werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren. Merkmale, die in Bezug auf Verfahrensschritte beschrieben worden sind, können durch entsprechende gegenständliche Merkmale realisiert sein, die zum Ausführen der jeweiligen Verfahrensschritte ausgebildet sind.

Der Schutzbereich der vorliegenden Erfindung ist durch die Ansprüche gegeben und wird durch die in der Beschreibung erläuterten oder den Figuren gezeigten Merkmale nicht beschränkt.

## Patentansprüche

1. Verfahren zum Betreiben einer Automatisierungskomponente (100) mittels eines Steuerprogramms (103), das mehrere Steuerprogrammkomponenten (103-1, ..., 103-n) umfasst, mit den Schritten:
- Erfassen (S101) von Fehlerereignissen des Steuerprogramms (103) während einem Betrieb der Automatisierungskomponente (100);
- Herunterladen (S102) einer aktuellen Steuerprogrammkomponente (103-1, ..., 103-n) aus einem zentralen System (203) zur Fehleranalyse auf Basis der erfassten Fehlerereignisse und auf Basis eines Prozessabbildes der Automatisierungskomponente (100); und
- Aktualisieren (S103) einer vorhandenen Steuerprogrammkomponente (103-1, ..., 103-n) zur Fehleranalyse durch die aktuelle Steuerprogrammkomponente (103-1, ..., 103-n) zur Fehleranalyse
**dadurch gekennzeichnet,**
**dass** das Prozessabbild ein Abbild der Signalzustände der digitalen Ein- und Ausgänge in einer CPU der Automatisierungskomponente (100) ist.

2. Verfahren nach Anspruch 1, wobei das Herunterladen einer aktuellen Steuerprogrammkomponente (103-1, ..., 103-n) zur Fehlerbehandlung auf Basis der erfassten Fehlerereignisse aus einer Datenbank des zentralen Systems (203) erfolgt.

3. Verfahren nach Anspruch 2, wobei das Aktualisieren einer vorhandenen Steuerprogrammkomponente (103-1, ..., 103-n) zur Fehlerbehandlung durch die aktuelle Steuerprogrammkomponente (103-1, ..., 103-n) zur Fehlerbehandlung erfolgt.

4. Verfahren nach einem der vorangehenden Ansprüche, wobei die heruntergeladene Steuerprogrammkomponente (103-1, ..., 103-n) auf schädliche Anweisungen hin überprüft wird.

5. Verfahren nach einem der vorangehenden Ansprüche, wobei die Fehlerereignisse der Automatisierungskomponente (100) an das zentrale System (203) übermittelt werden.

6. Verfahren nach Anspruch 5, wobei die Fehlerereignisse in dem zentralen System (203) auf jeweilige Steuerprogrammkomponenten (103-1, ..., 103-n) zur Fehleranalyse oder Fehlerbehandlung abgebildet werden.

7. Verfahren nach einem der vorangehenden Ansprüche, wobei die Automatisierungskomponente (100) eine Gerätekennung oder einen Gerätetyp an das zentrale System (203) übermittelt.

8. Verfahren nach einem der vorangehenden Ansprüche, wobei das zentrale System (203) die Steuerprogrammkomponente (103-1, ..., 103-n) zur Fehleranalyse oder Fehlerbehandlung auf Basis der übermittelten Gerätekennung oder des übermittelten Gerätetyps bestimmt.

9. Automatisierungskomponente (100) mit einem Steuerprogramm (103), das mehrere Steuerprogrammkomponenten (103-1, ..., 103-n) umfasst, mit:
einer Fehlerereigniserfassungseinheit (105) zum Erfassen von Fehlerereignissen des Steuerprogramms (103) während einem Betrieb der Automatisierungskomponente (100);
eine Nachladeeinheit (107), eingerichtet zum Herunterladen einer aktuellen Steuerprogrammkomponente (103-1, ..., 103-n) aus einem zentralen System zur Fehleranalyse auf Basis der Fehlerereignisse und auf Basis eines Prozessabbildes der Automatisierungskomponente (100); und
eine Aktualisierungseinheit, eingerichtet zum Aktualisieren einer vorhandenen Steuerprogrammkomponente (103-1, ..., 103-n) durch die aktuelle Steuerprogrammkomponente zur Fehleranalyse,
**dadurch gekennzeichnet,**
**dass** das Prozessabbild ein Abbild der Signalzustände der digitalen Ein- und Ausgänge in einer CPU der Automatisierungskomponente (100) ist.

10. Automatisierungskomponente (100) nach Anspruch 9, wobei die Automatisierungskomponente (100) eine Vorrichtung zum Überprüfen der heruntergeladenen Steuerprogrammkomponente (103-1, ..., 103-n) auf schädliche Anweisungen hin umfasst.

11. Automatisierungskomponente (100) nach Anspruch 9 oder 10, wobei die Automatisierungskomponente (100) eine Sendeinrichtung zum Senden der Fehlerereignisse an das zentrale System (203) umfasst.

12. Automatisierungskomponente (100) nach einem der Ansprüche 9 bis 11, wobei die Automatisierungskomponente (100) eine Sendeinrichtung zum Senden einer Gerätekennung oder eines Gerätetyps an das zentrale System (203) umfasst.

13. Automatisierungskomponente (100) nach einem der Ansprüche 9 bis 12, wobei die Aktualisierungseinheit (109) zum Aktualisieren einer vorhandenen Steuerprogrammkomponente (103-1, ..., 103-n) zur Fehlerbehebung durch eine aktuelle Steuerprogrammkomponente (103-1, ..., 103-n) zur Fehlerbehebung ausgebildet ist.

14. Automatisierungssystem (200) mit einer Mehrzahl von Automatisierungskomponenten (100) nach Anspruch 9, **gekennzeichnet durch**:
ein zentrales System (203), das mit den Automatisierungskomponenten (100) zum Erfassen von Fehlereignissen verbunden ist, und das eine Abbildungstabelle zum Abbilden von übermittelten Fehlerereignissen auf entsprechende Steuerprogrammkomponenten (103-1, ..., 103-n) zur Fehleranalyse oder Fehlerbehandlung umfasst.

## Claims

1. Method for operating an automation component (100) by means of a control program (103) comprising a plurality of control program components (103-1, ..., 103-n), having the steps of:
- detecting (S101) fault events of the control program (103) during operation of the automation component (100);
- downloading (S102) a current control program component (103-1, ..., 103-n) from a central system (203) for fault analysis on the basis of the detected fault events and on the basis of a process image of the automation component (100); and
- updating (S103) an existing control program component (103-1, ..., 103-n) for fault analysis by means of the current control program component (103-1, ..., 103-n) for fault analysis,
**characterized**
**in that** the process image is an image of the signal states of the digital inputs and outputs in a CPU of the automation component (100).

2. Method according to Claim 1, downloading of a current control program component (103-1, ..., 103-n) for fault handling taking place from a database of the central system (203) on the basis of the detected fault events.

3. Method according to Claim 2, updating of an existing control program component (103-1, ..., 103-n) for fault handling taking place by means of the current control program component (103-1, ..., 103-n) for fault handling.

4. Method according to one of the preceding claims, the downloaded control program component (103-1, ..., 103-n) being checked for harmful instructions.

5. Method according to one of the preceding claims, the fault events of the automation component (100) being transmitted to the central system (203).

6. Method according to Claim 5, the fault events being mapped to respective control program components (103-1, ..., 103-n) for fault analysis or fault handling in the central system (203).

7. Method according to one of the preceding claims, the automation component (100) transmitting a device identifier or a device type to the central system (203).

8. Method according to one of the preceding claims, the central system (203) determining the control program component (103-1, ..., 103-n) for fault analysis or fault handling on the basis of the transmitted device identifier or the transmitted device type.

9. Automation component (100) having a control program (103) comprising a plurality of control program components (103-1, ..., 103-n), having:
a fault event detection unit (105) for detecting fault events of the control program (103) during operation of the automation component (100);
a downloading unit (107) set up for downloading a current control program component (103-1, ..., 103-n) from a central system for fault analysis on the basis of the fault events and on the basis of a process image of the automation component (100); and
an update unit set up for updating an existing control program component (103-1, ..., 103-n) by means of the current control program component for fault analysis,
**characterized**
**in that** the process image is an image of the signal states of the digital inputs and outputs in a CPU of the automation component (100).

10. Automation component (100) according to Claim 9, the automation component (100) comprising an apparatus for checking the downloaded control program component (103-1, ..., 103-n) for harmful instructions.

11. Automation component (100) according to Claim 9 or 10, the automation component (100) comprising a transmitting device for transmitting the fault events to the central system (203) .

12. Automation component (100) according to one of Claims 9 to 11, the automation component (100) comprising a transmitting device for transmitting a device identifier or a device type to the central system (203).

13. Automation component (100) according to one of Claims 9 to 12, the update unit (109) being designed to update an existing control program component (103-1, ..., 103-n) for fault elimination by means of a current control program component (103-1, ..., 103-n) for fault elimination.

14. Automation system (200) having a plurality of automation components (100) according to Claim 9, **characterized by**:
a central system (203) which is connected to the automation components (100) for detecting fault events and comprises a mapping table for mapping transmitted fault events to corresponding control program components (103-1, ..., 103-n) for fault analysis or fault handling.

## Revendications

1. Procédé de fonctionnement d'un composant d'automatisation (100) au moyen d'un programme de commande (103) comprenant une pluralité de composants de programme de commande (103 - 1, ..., 103-n), comprenant les étapes de :
- détection (S101) des événements d'erreur du programme de commande (103) pendant un fonctionnement du composant d'automatisation (100) ;
- téléchargement (S102) d'un composant de programme de commande actuel (103-1, 103-n) à partir d'un système central (203) pour une analyse d'erreur sur la base des événements d'erreur détectés et sur une image de processus du composant d'automatisation (100) ; et
- mise à jour (S103) d'un composant de programme de commande existant (103-1, ..., 103-n) pour une analyse d'erreur par le composant de programme de commande actuel (103-1, ..., 103-n) pour une analyse d'erreur
**caractérisé en ce que**
l'image de processus est une représentation des états du signal des entrées et sorties digitales dans une CPU du composant d'automatisation (100).

2. Procédé selon la revendication 1, dans lequel le téléchargement d'un composant de programme de commande actuel (103-1, ..., 103-n) a lieu pour le traitement d'erreur sur la base des événements d'erreur détectés à partir d'une base de données du système central (203).

3. Procédé selon la revendication 2, dans lequel la mise à jour d'un composant de programme de commande existant (103-1, ..., 103-n) pour le traitement d'erreur a lieu par le composant de programme de commande actuel (103-1, ..., 103-n) pour le traitement d'erreur.

4. Procédé selon l'une des revendications précédentes, dans lequel le composant de programme de commande téléchargé (103-1, ..., 103-n) est vérifié sur des instructions malveillantes.

5. Procédé selon l'une des revendications précédentes, dans lequel les événements d'erreur du composant d'automatisation (100) sont transmis au système central (203).

6. Procédé selon la revendication 5, dans lequel les événements d'erreur sont représentés sur le système central (203) sur des composants de programme de commande respectifs (103-1, ..., 103-n) pour une analyse d'erreur ou un traitement d'erreur.

7. Procédé selon l'une des revendications précédentes, dans lequel le composant d'automatisation (100) transmet un identifiant de dispositif ou un type de dispositif au système central (203).

8. Procédé selon l'une des revendications précédentes, dans lequel le système central (203) détermine le composant de programme de commande (103-1, ..., 103-n) pour une analyse d'erreur ou un traitement d'erreur sur la base de l'identifiant de dispositif transmis ou du type de dispositif transmis.

9. Composant d'automatisation (100) comprenant un programme de commande (103) comprenant une pluralité de composants de programme de commande (103-1, ..., 103-n), comprenant :
une unité de détection d'événement d'erreur (105) destinée à détecter des événements d'erreur du programme de commande (103) pendant le fonctionnement du composant d'automatisation (100) ;
une unité de rechargement (107) adaptée destinée à télécharger un composant de programme de commande actuel (103-1, ..., 103-n) depuis un système central (203) pour une analyse d'erreur sur la base des événements d'erreur et sur une image de processus du composant d'automatisation (100) ; et
une unité de mise à jour adaptée destinée à mettre à jour un composant de programme de commande existant (103-1, ..., 103-n) par le composant de programme de commande actuel pour une analyse d'erreur,
**caractérisé en ce que**
l'image de processus est une représentation des états du signal des entrées et sorties digitales dans une CPU du composant d'automatisation (100).

10. Composant d'automatisation (100) selon la revendication 9, dans lequel le composant d'automatisation (100) comprend un dispositif destiné à vérifier le composant de programme de commande téléchargé (103-1, ..., 103-n) sur des instructions malveillantes.

11. Composant d'automatisation (100) selon la revendication 9 ou 10, dans lequel le composant d'automatisation (100) comprend un dispositif de transmission destiné à transmettre les événements d'erreur au système central (203).

12. Composant d'automatisation (100) selon l'une des revendications 9 à 11, dans lequel le composant d'automatisation (100) comprend un dispositif de transmission destiné à transmettre un identifiant de dispositif ou un type de dispositif au système central (203).

13. Composant d'automatisation (100) selon l'une des revendications 9 à 12, dans lequel l'unité de mise à jour (109) destinée à mettre à jour un composant de programme de commande existant (103-1, ..., 103-n) est conçu pour le dépannage par un composant de programme de commande actuel (103-1, ..., 103- n) .

14. Système d'automatisation (200) comprenant une pluralité de composants d'automatisation (100) selon la revendication 9, **caractérisé par** :
un système central (203) lié aux composants d'automatisation (100) destiné à détecter des événements d'erreur et comprenant une table de mappage destinée à mapper des événements d'erreur transmis aux composants de programme de commande correspondants (103-1, ..., 103-n) pour une analyse d'erreur ou un traitement d'erreur.
